# EUROPEAN PATENT APPLICATION

(11) **EP 4 725 590 A1**
(43) Date of publication of application: **15.04.2026**
(21) Application number: 24819387.2
(22) Date of filing: 06.06.2024
(51) Int. Cl.: B01D 63/02, B01D 69/08

(54) **HOLLOW FIBER MEMBRANE MODULE**

(30) Priority: 08.06.2023 JP 2023094783
(71) Applicant: NOK Corporation, Minato-ku, Tokyo 105-8585 (JP)
(72) Inventor: TSUNAJIMA, Shunichi, Kikugawa-shi, Shizuoka 437-1507 (JP)
(74) Representative: Global IP Europe Patentanwaltskanzlei
(86) International application number: PCT/JP2024/020705
(87) International publication number: WO 2024/253159

(57) **Abstract**

A hollow fiber membrane module 10 including an outer case 100, an inner case 200, a hollow fiber membrane bundle 300 having a plurality of hollow fiber membranes filled in an annular gap between the outer case 100 and the inner case 200, a first sealing part 410, and a second sealing part 420, the hollow fiber membrane module 10 further including a membrane exterior passage that is formed to pass from an opening of the inner case 200 through a first through hole 230 and reach a second through hole 130 through the exteriors of the plurality of hollow fiber membranes, and a membrane interior passage that is formed to pass through the interiors of the plurality of hollow fiber membranes, wherein, a cylindrical member 500 having a plurality of third through holes 510, each of which becomes a part of the membrane exterior passage, is provided between the hollow fiber membrane bundle 300 and the outer case 100.

## Description

### [Technical Field]

The present invention relates to a hollow fiber membrane module.

### [Background Art]

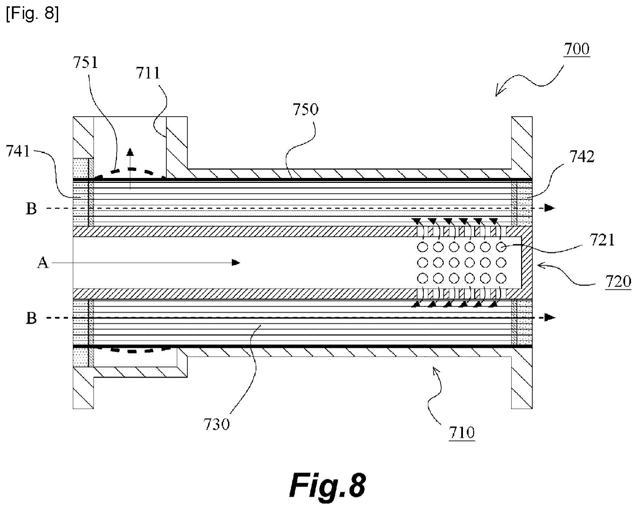

A humidifying device used for a fuel cell includes a hollow fiber membrane module. With reference to Fig. 8, the hollow fiber membrane module 700 according to a related art is explained. Fig. 8 is a schematic cross-sectional diagram of the hollow fiber membrane module according to the related art.

The hollow fiber membrane module 700 includes an outer case 710, an inner case 720 disposed inside the outer case 710, and a hollow fiber membrane bundle 730 having a plurality of the hollow fiber membranes filled in an annular gap between the outer case 710 and the inner case 720. A gap among a plurality of hollow fiber membranes is sealed by a first sealing part 741 and a second sealing part 742 on both ends thereof in a state in which a hollow interior of each of the hollow fiber membranes is open.

A first through hole 721 is provided in the inner case 720 and a second through hole 711 is provided in the outer case 710. As a result, a membrane exterior passage from an opening of the inner case 720 through the first through hole 721 and then through the exteriors of the plurality of hollow fiber membranes to the second through hole 711 (indicated by an arrow A) is formed. In addition, a membrane interior passage passing through interiors of the plurality of hollow fiber membranes (indicated by an arrow B) is formed. For example, by causing wet gas to flow through the membrane exterior passage and dry gas to flow through the membrane interior passage, the wet gas is dried, and the dry gas is humidified. As described above, the dry gas can be humidified, and the hollow fiber membrane module 700 is used as a humidifying device that is used for a fuel cell.

In the hollow fiber membrane module 700 constituted as above, particularly in the vicinity of the second through hole 711, the hollow fiber membrane swings so as to be swollen to the outside by the gas flowing through the membrane exterior passage (indicated by a bold dotted line in the drawing). When the swing of the hollow fiber membrane occurs, and a filled state thereof becomes uneven, and a quality is affected, e.g., humidification efficiency is easily varied. Hence, in general, the hollow fiber membrane bundle 730 is wound by a mesh 750 as shown so as to be protected. However, in recent years, a capacity increase of fuel cells progresses and accordingly, in the hollow fiber membrane module provided in the humidifying device, much higher flow rates are in demand. Therefore, merely winding the hollow fiber membrane bundle 730 by the mesh 750 has become insufficient as a measure for suppressing swing of the hollow fiber membrane.

### [Citation List]

### [Patent Literature]

[PTL 1]
Japanese Patent Laid-open Application No. 2020-16366

### [Summary of Invention]

### [Technical Problem]

The present invention provides a hollow fiber membrane module which can suppress swing of a hollow fiber membrane.

### [Solution to Problem]

The present invention has adopted the following means in order to solve the above-described problem.

That is, one aspect of the present invention is a hollow fiber membrane module including:
a cylindrical outer case, both ends of which are open;
a cylindrical inner case, one end of which is open and the other end side of which is closed, and disposed inside the outer case;
a hollow fiber membrane bundle having a plurality of hollow fiber membranes filled in an annular gap between the outer case and the inner case;
a first sealing part which seals a gap among the plurality of hollow fiber membranes in a state in which a hollow interior of each of the hollow fiber membranes is open on one end side of each of the outer case and the inner case;
a second sealing part which seals a gap among the plurality of hollow fiber membranes in a state in which the hollow interior of each of the hollow fiber membranes is open on the other end side of each of the outer case and the inner case,
wherein the inner case is provided with a first through hole and the outer case is provided with a second through hole such that a membrane exterior passage and a membrane interior passage are formed, the membrane exterior passage passing from the opening of the inner case through the first through hole and then reaching the second through hole through the exteriors of the plurality of hollow fiber membranes, and the membrane interior passage passing through the interiors of the plurality of hollow fiber membranes, and
wherein a cylindrical member having a plurality of third through holes, each of which forms a part of the membrane exterior passage, is provided between the hollow fiber membrane bundle and the outer case.

According to the present invention, the cylindrical member can prevent the swing of the hollow fiber membrane. In addition, the plurality of third through holes provided in the cylindrical member can rectify a fluid flowing through the membrane exterior passage.

### [Advantageous Effects of Invention]

As described above, according to the present invention, the swing of the hollow fiber membrane can be suppressed.

### [Brief Description of Drawings]

[Fig. 1]

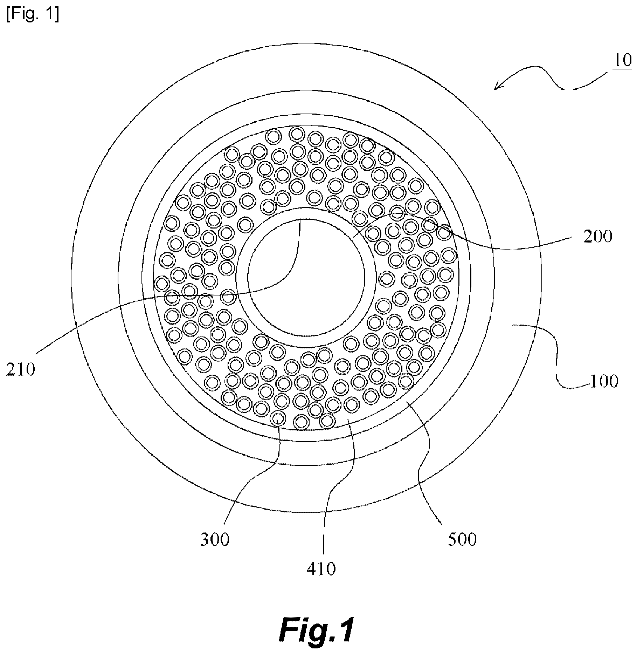

   Fig. 1 is a front view of a hollow fiber membrane module according to an embodiment 1 of the present invention.
[Fig. 2]

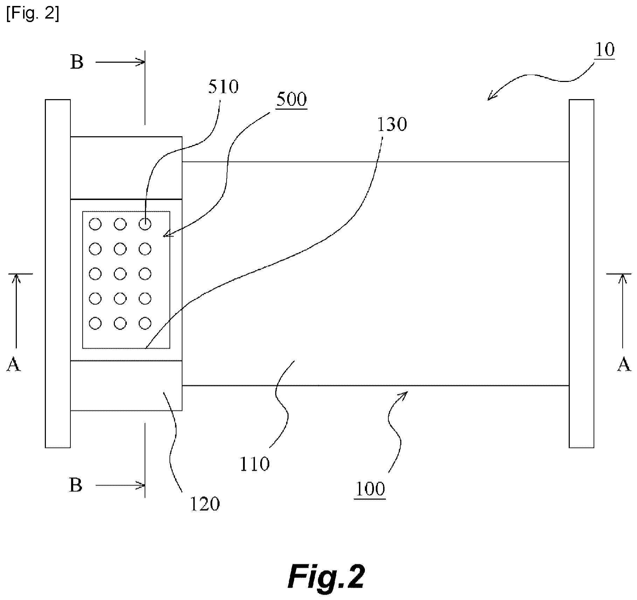

   Fig. 2 is a plan view of the hollow fiber membrane module according to the embodiment 1 of the present invention.
[Fig. 3]

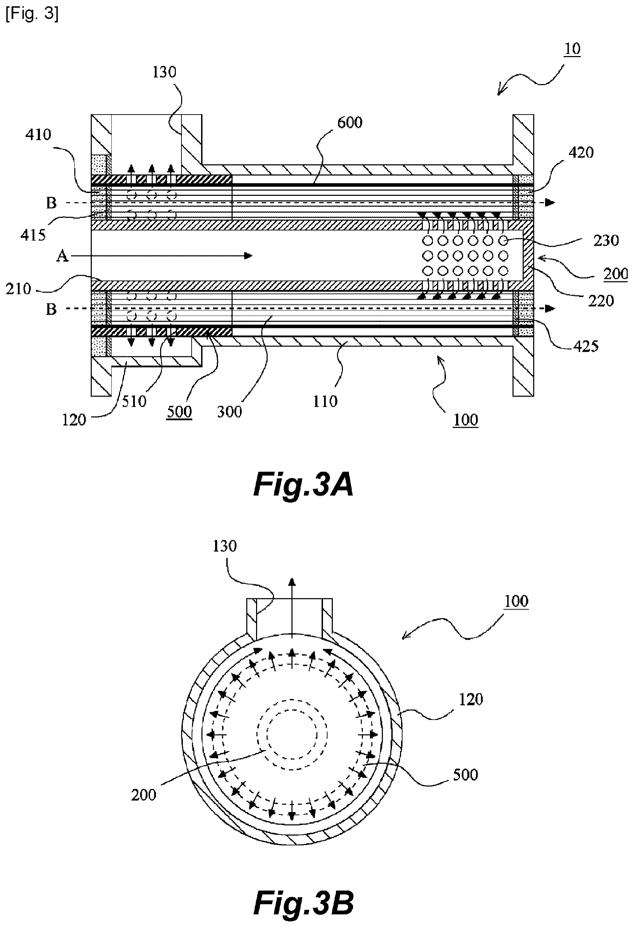

   Figs. 3 are schematic cross-sectional diagrams of the hollow fiber membrane module according to the embodiment 1 of the present invention.
[Fig. 4]

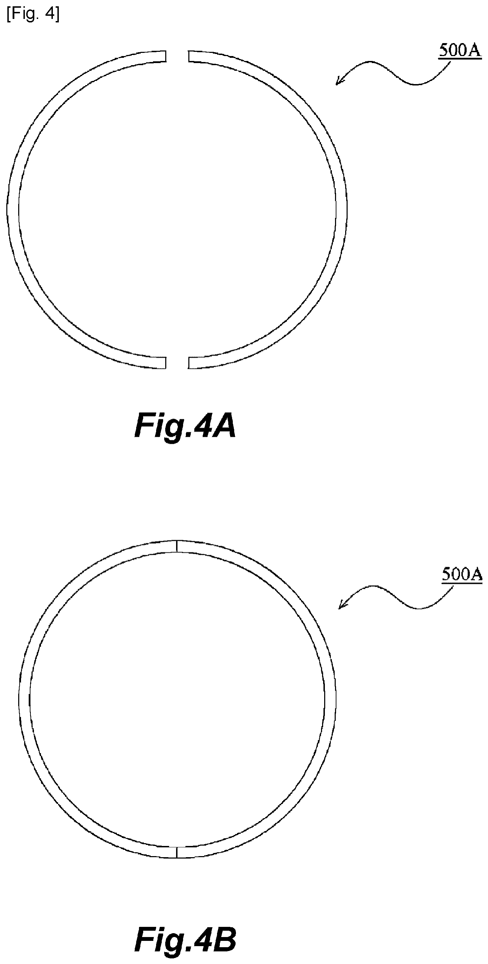

   Figs. 4 are front views illustrating variations of a cylindrical member provided in the hollow fiber membrane module according to the embodiment 1 of the present invention.
[Fig. 5]

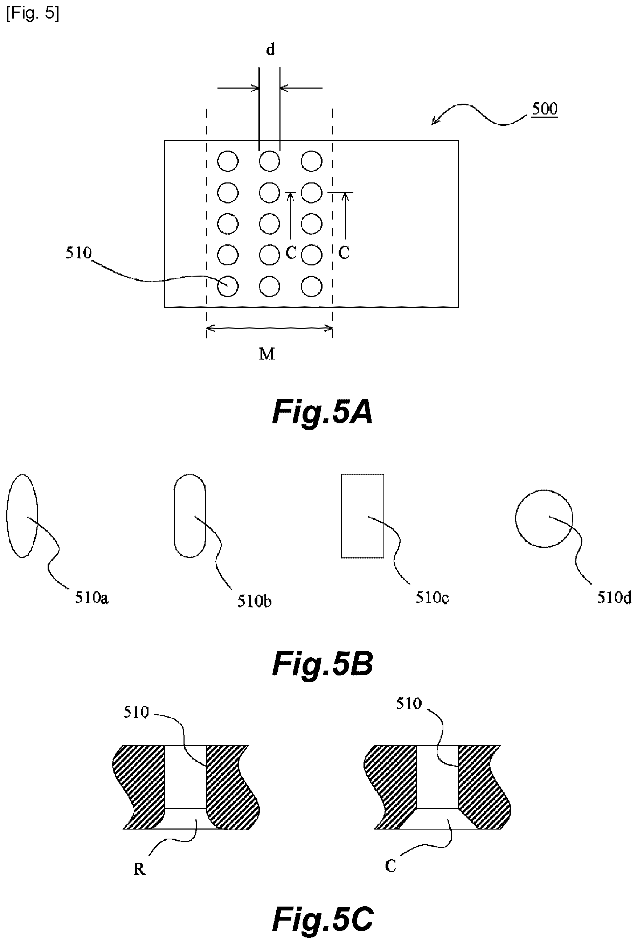

   Figs. 5 are explanatory diagrams of the cylindrical member according to the embodiment 1 of the present invention.
[Fig. 6]

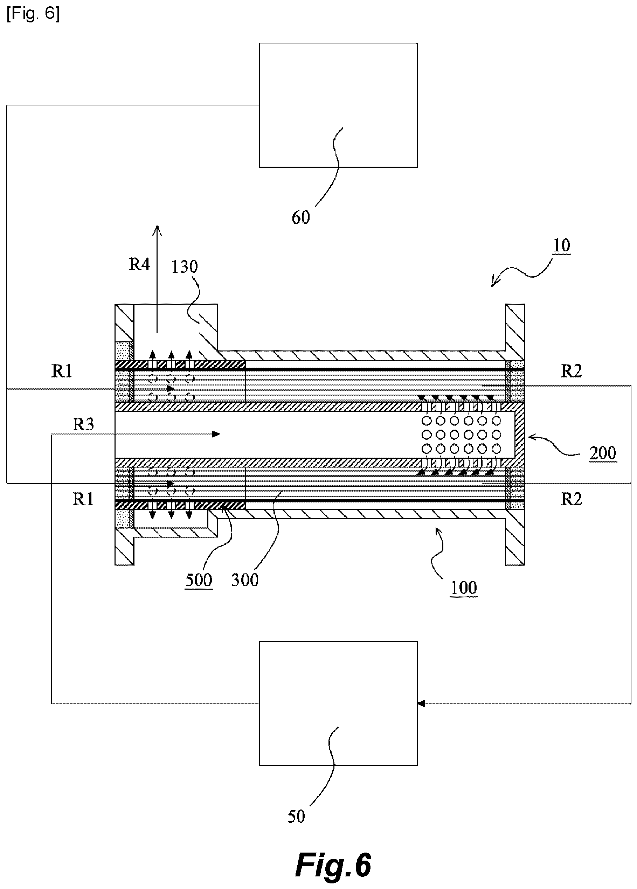

   Fig. 6 is a schematic diagram illustrating an application example of the hollow fiber membrane module according to the embodiment of the present invention.
[Fig. 7]

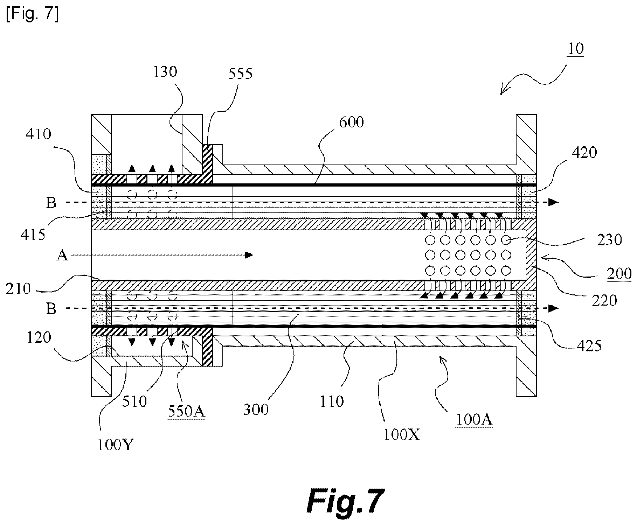

   Fig. 7 is a schematic cross-sectional diagram of the hollow fiber membrane module according to an embodiment 2 of the present invention.
[Fig. 8]
   Fig. 8 is a schematic cross-sectional diagram illustrating of the hollow fiber membrane module according to a related art.

### [Description of the Embodiments]

Hereinafter, with reference to the drawings, forms for embodying this invention will be explained in detail in an exemplified manner on the basis of the embodiments. However, dimensions, materials, shapes, relative dispositions thereof and the like of components described in the embodiments are not intended to limit the range of the present invention to that range unless otherwise specifically described.

### (Embodiment 1)

With reference to Fig. 1 to Fig. 5, a hollow fiber membrane module according to an embodiment 1 of the present invention will be explained. Fig. 1 is a front view of the hollow fiber membrane module according to the embodiment 1 of the present invention. Fig. 2 is a plan view (top view) of the hollow fiber membrane module according to the embodiment 1 of the present invention. Figs. 3 are schematic cross-sectional diagrams of the hollow fiber membrane module according to the embodiment 1 of the present invention. Fig. 3A is a cross-sectional view by AA line in Fig. 2, and Fig. 3B is a cross-sectional view by BB line of an outer case in Fig. 2. Note that, in Fig. 3B, positions of an inner case and a cylindrical member are indicated by a dotted line. Figs. 4 are front views illustrating variations of the cylindrical member provided in the hollow fiber membrane module according to the embodiment 1 of the present invention. Figs. 5 are explanatory diagrams of the cylindrical member according to the embodiment 1 of the present invention.

### (Hollow Fiber Membrane Module)

A hollow fiber membrane module 10 includes an outer case 100, an inner case 200 disposed inside the outer case 100, and a hollow fiber membrane bundle 300 having a plurality of hollow fiber membranes filled in an annular gap between the outer case 100 and the inner case 200. The outer case 100 has a cylindrical member with both ends open. In addition, the inner case 200 has a cylindrical member with one end open (indicated by an opening 210) and the other end closed (indicated by a closed portion 220). The outer case 100 and the inner case 200 are composed of a material with high rigidity (metal such as aluminum and a hard resin such as PPS, for example).

The hollow fiber membrane module 10 includes a first sealing part 410 that seals a gap among the plurality of hollow fiber membranes in a state in which a hollow interior of each hollow fiber membrane is open on the one end side of the outer case 100 and the inner case 200. Inside the first sealing part 410, in order to suppress breakage of the hollow fiber membrane on a boundary surface with the first sealing part 410 even if the hollow fiber membrane swings, a protective layer 415 composed of a material with high flexibility such as silicon is provided.

Similarly, the hollow fiber membrane module 10 includes a second sealing part 420 that seals the gap among the plurality of hollow fiber membranes in a state in which the hollow interior of each hollow fiber membrane is open on the other end side of the outer case 100 and the inner case 200. Inside the second sealing part 420, a protective layer 425 is provided.

As a material of the hollow fiber membrane, polyphenylsulphone (PPSU) can be used, and as a material of the first sealing part 410 and the second sealing part 420, an epoxy resin can be used. In general, the sealing part (also called a potting part) can be obtained by hardening a material (potting material) such as a liquid-state epoxy resin. By using this nature, the first sealing part 410 and the second sealing part 420 can be fixed to the outer case 100 and the inner case 200. Note that the first sealing part 410 and the second sealing part 420 after being hardened may be fixed separately to the outer case 100 and the inner case 200 by an adhesive or the like.

A plurality of first through holes 230 are provided in the inner case 200 over the entire circumference. The plurality of first through holes 230 are provided in the inner case 200 at positions near the other end side (closed portion 220 side). A second through hole 130 is provided in the outer case 100. The second through hole 130 is provided at a position near the one end side (opening 210 side in the inner case 200). By means of the configuration as above, the membrane exterior passage, which passes from the opening of the inner case 200 (opening 210) through the first through hole 230 and the exteriors of the plurality of hollow fiber membranes to the second through hole 130, is formed (indicated by an arrow A drawn in a solid line in Fig. 3). Here, the outer case 100 includes a first cylinder portion 110 and a second cylinder portion 120 whose inner diameter is larger than that of the first cylinder portion 110. In this embodiment, the above-described second through hole 130 is provided at one location in the circumferential direction in the second cylinder portion 120. And a relatively large gap is formed between an inner peripheral surface of the second cylinder portion 120 and an outer peripheral surface of the hollow fiber membrane bundle 300 (indicated in Fig. 3). Thus, a fluid flowing through the membrane exterior passage flows to the outside of the bundle from the entire circumference of the hollow fiber membrane bundle 300 by flowing from the inside of the first cylinder portion 110 to the second cylinder portion 120 and then, flows to the second through hole 130 (indicated in Fig. 3B).

In addition, in the hollow fiber membrane module 10 configured as above, a membrane interior passage, which passes through the interiors of the plurality of hollow fiber membranes, is also formed (indicated by an arrow B drawn in a dotted line in Fig. 3A).

The hollow fiber membrane module 10 configured as above can be applied as a humidifying device and a dehumidifying device. For example, by configuring such that dry gas is caused to flow through the membrane interior passage and wet gas with humidity higher than that of the dry gas is caused to flow through the membrane exterior passage, it can be applied as a humidifying device or a dehumidifying device. By configuring as above, a membrane separation action by the hollow fiber membrane allows moisture in the wet gas to move into the dry gas. Therefore, the dry gas is humidified and the wet gas is dehumidified, and thus, it can be used both as the humidifying device and the dehumidifying device.

The hollow fiber membrane module 10 according to this embodiment can be used as a humidifying device for humidifying an electrolyte membrane provided in a fuel cell. In this case, wet air generated in the fuel cell is used as the above-described wet gas. By supplying humidified gas (air) to the electrolyte membrane provided in the fuel cell, the electrolyte membrane is kept in a wet state.

In the hollow fiber membrane module 10, the membrane interior passage passing through the membrane interiors of the plurality of hollow fiber membranes and the membrane exterior passage passing through the membrane exteriors of the hollow fiber membranes are provided. For example, the membrane interior passage is configured such that the dry gas flows from one end side of the outer case 100 through the hollow interiors of the plurality of hollow fiber membranes to the other end side of the outer case 100 (indicated by the dotted-line arrow B in Fig. 3). The membrane exterior passage is configured such that wet gas with humidity higher than that of the dry gas flows inside the outer case 100 (indicated by the solid-line arrow A in Fig. 3).

By means of the configuration as above, the membrane separation action by the hollow fiber membrane allows the moisture in the wet gas to move into the dry gas. Therefore, the dry gas is humidified and the wet gas is dehumidified, and thus, it can be used both as the humidifying device and the dehumidifying device.

The hollow fiber membrane module 10 according to this embodiment can be used as a humidifying device for humidifying the electrolyte membrane provided in the fuel cell 50. With reference to Fig. 6, the configuration in which the hollow fiber membrane module 10 is used as the humidifying device as above will be explained. As illustrated, dry air is supplied to the membrane interior passage of the hollow fiber membrane module 10 by a compressor 60 (indicated by an arrow R1). As described above, the dry air flowing through the membrane interior passage is humidified and discharged from the hollow fiber membrane module 10. This humidified wet air is supplied to the fuel cell 50 (indicated by an arrow R2). As a result, the electrolyte membrane provided in the fuel cell 50 is maintained in the wet state. The wet air generated in the fuel cell 50 is supplied to the membrane exterior passage of the hollow fiber membrane module 10 (indicated by an arrow R3), and the dry air dehumidified by the membrane separation action by the hollow fiber membrane is discharged from the hollow fiber membrane module 10 (indicated by an arrow R4). Note that, though the wet air generated in the fuel cell 50 has high temperature, since temperature of the dry air supplied from the compressor 60 is low, the temperature of the wet air discharged from the hollow fiber membrane module 10 becomes low. Thus, the hollow fiber membrane module 10 also exerts a heat-exchange function.

When the hollow fiber membrane module 10 configured as above is used under a high flow-rate environment, in the second cylinder portion 120 with a large inner diameter, the hollow fiber membrane largely swings particularly in the vicinity of the second through hole 130. To address this, this embodiment is configured such that a cylindrical member 500 having a plurality of third through holes 510, which become a part of the membrane exterior passage, respectively, is provided between the hollow fiber membrane bundle 300 and the outer case 100. The plurality of third through holes 510 are provided over the entire circumference. The cylindrical member 500 is made of a material with high rigidity (for example, metal such as aluminum or a hard resin such as PPS) similarly to the outer case 100 and the inner case 200. Specifically, the cylindrical member 500 is configured by a material with rigidity of such a degree that it is not deformed or broken by a high flow-rate fluid.

### (Advantage of Hollow Fiber Membrane Module according to this Embodiment)

According to the hollow fiber membrane module 10 according to this embodiment, since the cylindrical member 500 is provided, the swing of the hollow fiber membrane can be suppressed. And since the plurality of third through holes 510 are provided in the cylindrical member 500, a rectification effect for the fluid flowing through the membrane exterior passage is exerted. As a result, since the fluid is uniformly brought into contact with the hollow fiber membrane, a pressure loss can be suppressed. In addition, when being used as a humidifying device, a humidification performance can be stabilized. Note that, in order to further suppress the swing of the hollow fiber membrane, as shown in Fig. 3, such a configuration that the hollow fiber membrane bundle 300 is wound by a mesh 600 for protection can be employed.

Hereinafter, various forms of the cylindrical member 500 will be explained. When the cylindrical member 500 is manufactured by a resin material, the cylindrical member 500 made of one member can be obtained by a known molding technique using a die. As shown in Fig. 4, a cylindrical member 500A according to a variation may be divided in the circumferential direction. Although this example shows a configuration in which the cylindrical member 500A is divided into two parts, the cylindrical member 500A may be divided into three parts or more. This configuration can reduce the size of a die and improve assembling performance.

The third through hole 510 may be configured such that the swing of the hollow fiber membrane is suppressed and the rectification function is effectively exerted. For example, the third through holes 510 may have a width d, which is 1 mm or more and 8 mm or less, in a direction parallel to the plurality of hollow fiber membranes. A flow rate of the fluid passing through the third through holes 510 can be increased by increasing a ratio (referred to as an aperture ratio) of the total area of all the third through holes 510 to an area of a surface facing the membrane exterior passage in an outer peripheral surface of the cylindrical member 500 (a surface facing the membrane exterior passage formed by a space between the inner peripheral surface of the second cylinder portion 120 and the cylindrical member 500). The aperture ratio may be set in consideration of a material and the like of the cylindrical member 500 in order to ensure rigidity of the cylindrical member 500. For example, the aperture ratio may be set 30% or more and 90% or less, or the aperture ratio may be set 30% or more and 60% or less. In a case where the width d of the third through hole 510 is set smaller, a target aperture ratio can be achieved by increasing the number of the third through holes 510. In Fig. 5A, a range M indicates a range of a surface facing the membrane exterior passage in the outer peripheral surface of the cylindrical member 500. The left side of the range M in the drawing is an area in which the first sealing part 410 and the protective layer 415 are provided, and the right side of the range M is an area with which the inner peripheral surface of the first cylinder portion 110 is in contact.

The hollow fiber membrane can be prevented from entering into the third through hole 510 if the width d thereof is set 8 mm or less, and thus, a planar shape thereof is not limited. For example, as shown in Fig. 5B, it may be an elliptic shape like a third through hole 510a, an oval shape like a third through hole 510b, a rectangular shape like a third through hole 510c, or a circular shape like a third through hole 510d. The planar shape of the through hole is desirably a circular shape because a stress can be distributed easily and strength of the cylindrical member 500 can be improved. The circular shape is desirable in view of better rectification effect. Note that, in a case where the planar shape of the through hole is an oval shape, as compared with the circular shape, an area of a wall part between the adjacent through holes can be made smaller and thus, the aperture ratio can be increased easily. In addition, in a case where the planar shape of the through hole is an oval shape, as compared with the rectangular shape, an angled part (edge part) is not formed in the thorough hole and thus, damage on the hollow fiber membrane by contact between the through hole and the hollow fiber membrane or lowering of the strength of the cylindrical member 500 in the vicinity of the through hole can be suppressed. In a case where the planar shape of the through hole is an oval shape, a longitudinal direction of the oval shape may be a direction intersecting (preferably, orthogonal to) a direction in which the hollow fiber membranes extend (left-right direction in Fig. 3). This prevents the swing of the hollow fiber membrane and the entry into the third through hole 510b. In addition, the opening area can be widened while the width d of the third through hole 510 is set to a certain level or less.

Chamfers having an R surface or a C surface may be provided on an inner peripheral surface side of the third through hole 510 as shown in Fig. 5C. This prevents damage on the hollow fiber membrane surface more reliably. Note that, the chamfers may be formed by metallic-molding in a case where the cylindrical member 500A is made of a resin and divided in the circumferential direction as shown in Fig. 4.

### (Embodiment 2)

Fig. 7 illustrates an embodiment 2 of the present invention. In the above-described embodiment 1, the outer case is constituted by a single member. In this embodiment, the outer case is constituted by two members. Since the other basic configurations and actions are the same as those in the embodiment 1, the same signs are given to the same constituent parts, and the explanation thereof will be omitted. Fig. 7 is a schematic cross-sectional diagram of the hollow fiber membrane module according to the embodiment 2 of the present invention.

The outer case 100 in the above-described embodiment 1 is constituted by a single member (single component). That is, the first cylinder portion 110 and the second cylinder portion 120 are provided integrally. On the other hand, the outer case 100A in this embodiment includes a first outer case 100X having the first cylinder portion 110 and a second outer case 100Y having the second cylinder portion 120.

A cylindrical member 550A in this embodiment has an outward flange portion 555. The cylindrical member 550A can be fixed by sandwiching the outward flange portion 555 by end surfaces of the first outer case 100X and the second outer case 100Y when these cases are to be fixed.

In the embodiment 1, a structure can be adopted, for example, in which the cylindrical member 500 is fixed to the outer case 100 by setting a force of press fitting the cylindrical member 500 into the outer case 100 higher. On the other hand, in this embodiment, since the cylindrical member 550A can be fixed by the outward flange portion 555 being sandwiched by the first outer case 100X and the second outer case 100Y, there is no need to set the force of press fitting of the cylindrical member 550A high as in the embodiment 1. Therefore, the assembling performance of the hollow fiber membrane module can be improved.

With the hollow fiber membrane module 10 according to this embodiment configured as above, the effects similar to those of the above-described embodiment 1 can be obtained. Note that, the cylindrical member 550A according to this embodiment may be divided in the circumferential direction similarly to the cylindrical member 500A according to the variation illustrated in Fig. 4. Note that the third through hole 510 may be same as explained in the embodiment 1 with reference to Fig. 5.

### (Others)

In the above-described embodiment, the outer case and the inner case are constituted by cylindrical members. That is, the shape of the inner peripheral surface and the outer peripheral surface of the case are circular if the case is cut down in a direction perpendicular to the plurality of hollow fiber membranes. However, the shapes of the outer case and the inner case which can be applied to the present invention are not limited. Specifically, the shape of the inner peripheral surface and the outer peripheral surface of the case may be various shapes such as an elliptic shape, an oval shape, a rectangular shape and the like if the case is cut down in the above-described direction. Similarly, the cylindrical member may be various shapes, and the shape of the outer peripheral surface may be adapted to the shape of the inner peripheral surface of the outer case.

### [Reference Signs List]

10 Holow fiber membrane module
100, 100A Outer case
100X First outer case
100Y Second outer case
110 First cylinder portion
120 Second cylinder portion
130 Second through hole
200 Inner case
210 Opening
220 Closed portion
230 First through hole
300 Hollow fiber membrane bundle
410 First sealing part
415 Protective layer
420 Second sealing portion
425 Protective layer
500, 500A, 550A Cylindrical member
510, 510a, 510b, 510c Third through hole
555 Outward flange portion
600 Mesh

## Claims

1. A hollow fiber membrane module comprising:
a cylindrical outer case, both ends of which are open;
a cylindrical inner case, one end of which is open and the other end side of which is closed, and disposed inside the outer case;
a hollow fiber membrane bundle having a plurality of hollow fiber membranes filled in an annular gap between the outer case and the inner case;
a first sealing part which seals a gap among the plurality of hollow fiber membranes in a state in which a hollow interior of each of the hollow fiber membranes is open on one end side of each of the outer case and the inner case;
a second sealing part which seals a gap among the plurality of hollow fiber membranes in a state in which the hollow interior of each of the hollow fiber membranes is open on the other end side of each of the outer case and the inner case,
wherein the inner case is provided with a first through hole and the outer case is provided with a second through hole such that a membrane exterior passage and a membrane interior passage are formed, the membrane exterior passage passing from the opening of the inner case through the first through hole and then reaching the second through hole through the exteriors of the plurality of hollow fiber membranes, and the membrane interior passage passing through the interiors of the plurality of hollow fiber membranes, and
wherein a cylindrical member having a plurality of third through holes, each of which forms a part of the membrane exterior passage, is provided between the hollow fiber membrane bundle and the outer case.
